# EUROPÄISCHE PATENTSCHRIFT

(11) **EP 2 451 626 B1**
(45) Veröffentlichungstag und Bekanntmachung des Hinweises auf die Patenterteilung: **11.03.2015**
(21) Anmeldenummer: 10723135.9
(22) Anmeldetag: 14.06.2010
(51) Int. Cl.: B29C 45/66, B29C 45/68, B30B 15/14, B30B 1/16, B30B 1/14

(54) **KNIEHEBEL-SCHLIESSEINHEIT**
TOGGLE LEVER CLAMPING UNIT
ENSEMBLE DE FERMETURE À LEVIER À GENOUILLÈRE

(30) Priorität: 04.07.2009 DE 102009031715
(43) Veröffentlichungstag der Anmeldung: 16.05.2012
(73) Patentinhaber: KraussMaffei Technologies GmbH, 80997 München (DE)
(72) Erfinder: AMMER, Daniel, 81735 München (DE); KRABICHLER, Georg, 85276 Pfaffenhofen (DE)
(74) Vertreter: Wilhelm, Ludwig
(86) Internationale Anmeldenummer: PCT/EP2010/058275
(87) Internationale Veröffentlichungsnummer: WO 2011/003694

(56) Entgegenhaltungen:
- JP-A- 5 237 844
- JP-A- 8 238 557

## Beschreibung

Die Erfindung betrifft eine Kniehebel-Schließeinheit für eine Spritzgießmaschine gemäß dem Oberbegriff von Anspruch 1.

Aus dem Stand der Technik sind gattungsgemäße Kniehebel-Schließeinheiten in vielfältigen Ausführungsformen bekannt. Grundsätzlich wird dabei mittels eines hydraulischen oder elektrischen Antriebs eine Translationsbewegung des sogenannten Kreuzkopfes realisiert. Der Kreuzkopf dient als zentraler Anlenkpunkt bzw. Antriebspunkt für die kraftleitenden Hebelpaare des Kniehebelmechanismus zwischen der Stützplatte und der beweglichen Formaufspannplatte der Schließeinheit. Die translatorische Bewegung des Kreuzkopfes wird mit Hilfe geeigneter Verbindungshebel zu den kraftleitenden Hebelpaaren in eine rotatorische Bewegung der kraftleitenden Hebelpaare umgesetzt, um diese zwischen einem eingeklappten Zustand entsprechend einer geöffneten Schließeinheit und einem gestreckten Zustand entsprechend einer geschlossenen und schließkraftbeaufschlagten Schließeinheit hin und her zu bewegen.

Diese bekannten Kniehebel-Schließeinheiten weisen einige Unzulänglichkeiten auf. Aufgrund des hohen Übersetzungsverhältnisses in der Durchstreckphase der kraftleitenden Hebelpaare ist ein langer Verfahrweg des Kreuzkopfes erforderlich, um die Schließkraft aufbauen zu können. Dies wirkt sich nachteilig auf die sogenannte Trockenlaufzeit aus. Ferner unterscheidet sich die am Kreuzkopf erforderliche Kraft über den gesamten Prozess in starkem Maße zwischen den Phasen der Schließbewegung einerseits und des Schließkraftaufbaus andererseits. Im Ergebnis kann die Auslegung des Antriebs für den Kreuzkopf somit nicht für beide Phasen bzw. beide Prozessbedingungen gleichmassen ideal gewählt werden. Darüberhinaus erweist sich bei elektrisch angetriebenen Kniehebel-Schließeinheiten mit Spindel-Mutter-Antrieb die Spindel in ihrem Abschnitt, der den Schließkraftaufbau realisiert, als mechanische Schwachstelle.

Zur Behebung dieser Nachteile sind verschiedene Ansätze aus dem Stand der Technik bekannt. Aus der JP08-238557A ist eine hydraulische Kniehebelschließeinheit gemäß dem Oberbegriff des Anspruchs 1 bekannt, die neben dem hydraulischen Antrieb zum Verfahren des Kreuzkopfes noch einen Kurzhubzylinder im Innern des Kreuzkopfes ausweist, mit dem der Kreuzkopf zur Erzeugung einer Schließkraft noch eine geringe Wegstrecke in axialer Richtung verfahren werden kann, um die kraftleitenden Hebelpaare in ihre durchgestreckte Lage zu bringen. Aus der JP05-237844A ist es bekannt, die kraftleitenden Hebel über Kolben-Zylinder-Einheiten in ihrer Länge zu verstellen. Die DE102004029269A1 offenbart eine Kniehebel-Schließeinheit, bei der zwischen dem Kreuzkopf und dem an dem Haupthebel angelenkten Verbindungshebel ein zusätzlicher Kniehebelmechanismus vorgesehen ist, der über den Antrieb für die Translationsbewegung des Kreuzkopfes betätigbar ist. Mit Hilfe dieses zusätzlichen Kniehebelmechanismus kann der Verbindungshebel gegenüber dem Kreuzkopf um ein Stück nach außen bewegt werden kann, um den Haupthebel, d.h. die kraftleitenden Hebelpaare, in die durchgestreckte Lage zu bringen.

Ausgehend von diesem Stand der Technik liegt der Erfindung die Aufgabe zugrunde, eine Kniehebel-Schließeinheit mit einem weiter verbesserten Antriebskonzept anzugeben.

Die Lösung dieser Aufgabe erfolgt durch eine Kniehebel-Schließeinheit mit den Merkmalen von Anspruch 1. Vorteilhafte Ausgestaltungen und Weiterentwicklungen finden sich in den Unteransprüchen.

Dadurch, dass neben dem Antrieb zum Verfahren des Kreuzkopfes ein oder mehrere weitere Antriebe vorgesehen sind, mit denen die Verbindungshebel gegenüber dem Kreuzkopf und/oder gegenüber den Haupthebeln im wesentlichen in einer Richtung orthogonal zur Maschinenlängsachse verfahrbar sind und/oder dass zwischen den Haupthebeln und dem Kreuzkopf in ihrer Länge veränderbare Verbindungshebel vorgesehen sind, wobei für die Verbindungshebel jeweils wenigstens ein weiterer Antrieb vorgesehen ist, mit dem die Länge des jeweiligen Verbindungshebels veränderbar ist, kann jeder dieser Antriebe für seine Zwecke ideal ausgelegt werden. Dies bedeutet insbesondere, dass der Verfahrantrieb für den Kreuzkopf ausschließlich auf das Auf- und Zufahren der Schließeinheit hin optimiert sein kann, d.h. insbesondere für schnelle Verfahrbewegungen bei geringem Kraftaufwand dimensioniert sein kann. Andererseits kann für den oder die weiteren Antriebe der Verbindungshebel ein auf eine hohe Krafterzeugung ausgelegter und optimierter Antrieb vorgesehen werden, wobei es weniger auf die Verfahrgeschwindigkeit ankommt. Dies führt zu einer Reduzierung der Trockenlaufzeit, da beide Antriebe aufgrund ihrer Auslegung ihre jeweils zugeordnete Aufgabe schneller ausführen können. Außerdem kann die energetische Ausnutzung aufgrund der getrennten Auslegung besser berücksichtigt werden, was insgesamt eine Energieeinsparung erwarten lässt. Bei idealer Auslegung lässt sich die translatorische Bewegung des Kreuzkopfs und die Antriebsbewegung der Verbindungshebel in einem gewissen begrenzten Bereich überlagern, um somit weitere Trockenlaufzeit bzw. Zykluszeit einzusparen.

In bevorzugter Ausgestaltung sind obere und untere sich einander gegenüberliegende kraftleitende Hebelpaare vorgesehen und jeweils ein Verbindungshebel mit einem eigenen Antrieb ist zwischen dem Kreuzkopf und diesen beiden Hebelpaaren vorgesehen. Die beiden Antriebe wirken dabei entgegengesetzt, so dass der Kreuzkopf selbst frei von Querkräften bleibt.

Als Antrieb für die Verbindungshebel können hydraulische oder elektrische Antriebe vorgesehen sein. Die hydraulischen Antriebe können beispielsweise als kurzhubige Hydraulikzylinder ausgebildet und in den Kreuzkopf integriert oder an diesen angebaut sein. Die kurzhubigen Hydraulikzylinder können aber auch in die Verbindungshebel integriert sein, so dass sich ein in seiner Länge mittels des Antriebs veränderbarer Verbindungshebel ergibt. Als elektrischer Antrieb kann beispielsweise ein Excenter-Antrieb an dem Kreuzkopf vorgesehen werden.

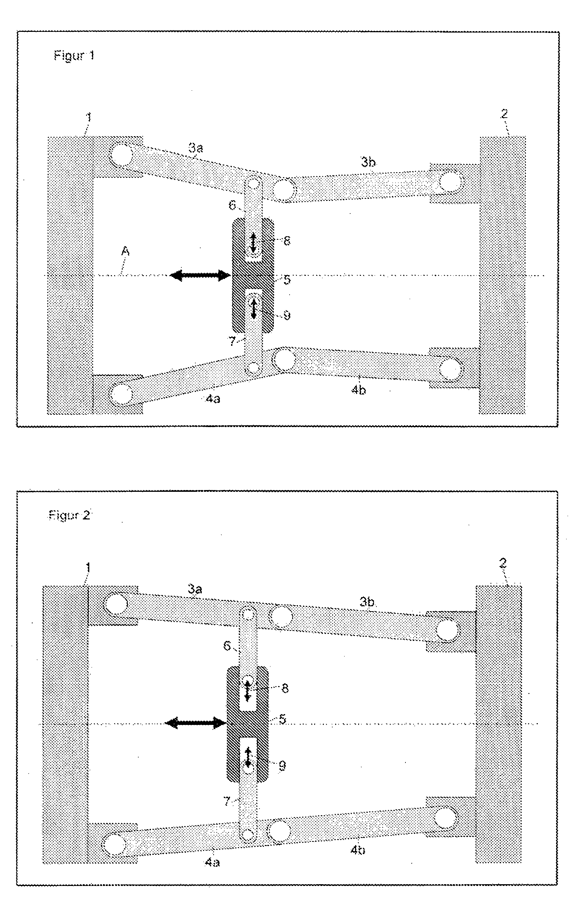

Nachfolgend soll die Erfindung anhand von Ausführungsbeispielen und unter Bezugnahme auf die Figuren 1 bis 8b näher beschrieben werden.

Die Figur 1 zeigt in schematischer Darstellung einen Teil einer Kniehebel-Schließeinheit in einem halbgestreckten Zustand, nämlich eine Stützplatte 1 und eine bewegliche Formaufspannplatte 2, die durch kraftleitende Hebel 3a, 3b und 4a, 4b oben und unten gelenkig miteinander verbunden sind. An jeweils einem der oberen und unteren Hebel, vorliegend an den Hebeln 3a und 4a sind Verbindungshebel 6 und 7 angelenkt und mit einem Kreuzkopf 5 verbunden. Der Kreuzkopf 5 kann mittels eines hier nicht dargestellten Antriebs entlang einer Maschinenlängsachse A, die auch der Spritzachse entsprechen kann, verfahren werden, wie dies durch den Doppelpfeil auf der Achse A angedeutet ist. In oder an dem Kreuzkopf 5 sind weitere Antriebe 8 und 9 vorgesehen, mit denen die Verbindungshebel 6 und 7 im wesentlichen in einer Richtung orthogonal zur Maschinenlängsachse A verfahren werden können. Beispielsweise können kurzhubige Hydraulikzylinder in oder an dem Kreuzkopf vorgesehen sein, wobei die Verbindungshebel 6 und 7 antriebstechnisch mit den jeweiligen Kolbenstangen gekoppelt sind. Zum Auf- und Zufahren der Kniehebel-Schließeinheit, d.h. zum Vor- und Zurückfahren der beweglichen Formaufspannplatte 2, wird der Kreuzkopf 5 in bekannter Weise von dem ihm zugeordneten Verfahrantrieb entlang der Maschinenlängsache A verfahren und die Hebelpaare 3a, 3b sowie 4a, 4b über die Verbindungshebel 6, 7 ein- und ausgeklappt.

Wenn die Kniehebel-Schließeinheit zugefahren ist, d.h. das zwischen den Formaufspannplatten eingesetzte Werkzeug geschlossen ist, können die Antriebe 8 und 9 aktiviert werden, um die Verbindungshebel 6 und 7 von dem Kreuzkopf 5 wegzubewegen und die kraftleitenden oberen und unteren Hebelpaare in ihren vollständig gestreckten Zustand zu bringen. Dieser Zustand ist in der Figur 2 dargestellt und bedeutet, dass Schließkraft aufgebaut ist. In umgekehrter Reihenfolge kann zunächst Schließkraft abgebaut werden, indem die Verbindungshebel 6 und 7 mittels der Antriebe 8 und 9 auf den Kreuzkopf 5 zubewegt werden und nachfolgend kann der Kreuzkopf 5 entlang der Maschinenlängsachse A in Öffnungsrichtung verfahren werden, wobei die Haupthebel bzw. die kraftleitenden Hebelpaare eingeklappt werden und die bewegliche Formaufspannplatte 2 von der hier nicht dargestellten feststehenden Formaufspannplatte weggefahren wird.

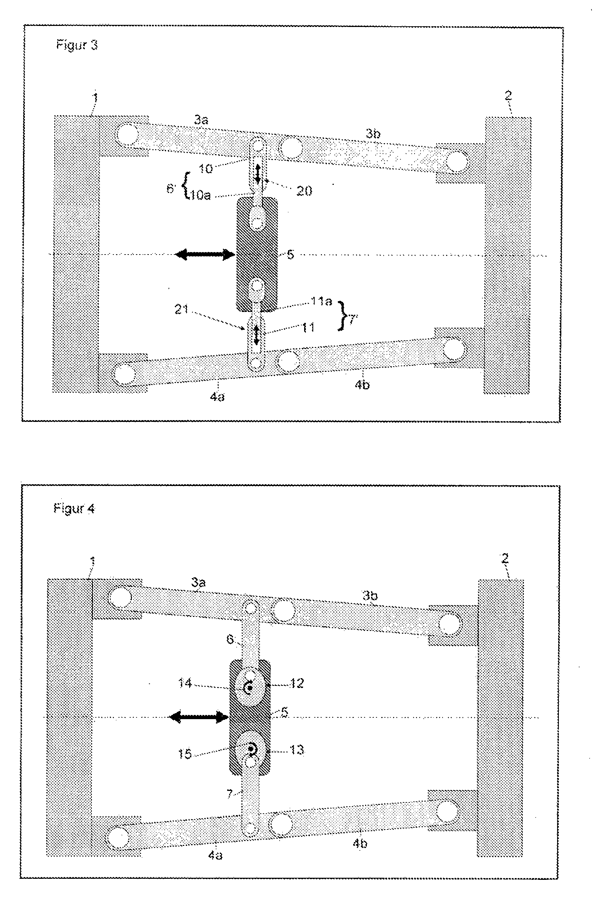

Die Figur 3 zeigt eine zweite Ausführungsform einer erfindungsgemäßen Kniehebel-Schließeinheit (lediglich im vollständig gestreckten Zustand), bei der in ihrer Länge veränderbare Verbindungshebel 6' und 7' vorgesehen sind, wobei für jeden der Verbindungshebel 6', 7' ein weiterer Antrieb 20, 21 vorgesehen ist, mit dem die Länge des jeweiligen Verbindungshebels 6', 7' veränderbar ist, um die Haupthebel bzw. die kraftleitenden Hebelpaare 3a, 3b sowie 4a, 4b in den durchgestreckten Zustand bringen zu können. Beispielsweise können die Verbindungshebel 6', 7' als Kolben-Zylinder-Einheiten 10, 10a, sowie 11, 11a ausgebildet sein, d.h. die Kolben-Zylinder-Einheiten 10, 10a sowie 11, 11 a stellen sowohl die Antriebe 20, 21 als auch die Verbindungshebel dar. Die Verbindungshebel zwischen dem Kreuzkopf und den Haupthebeln sind also aus mehreren Teilen zusammengesetzt. Jeweils ein erstes Teil ist als Zylinder 10, 11 ausgebildet und gelenkig an dem zugehörigen Hebel 3a, 4a befestigt. Die Kolbenstangen 10a und 11a bilden den zweiten Teil des Verbindungshebels. Diese verfügen wie bei bekannten Kolben-Zylinder-Einheiten jeweils über einen Kolben (hier nicht dargestellt), der in dem Zylinder 10 bzw. 11 mit einem Druckmittel beaufschlagt werden kann. Die Kolben-Zylinder-Einheiten bilden also einerseits die weiteren Antriebe 20 bzw. 21, mit denen die Verbindungshebel in ihrer Länge verändert werden können und sie bilden auch die Verbindungshebel 6', 7' selbst. In dem hier gezeigten Beispiel sind die Verbindungshebel 6', 7' mit den Antrieben 20, 21 gleichzusetzen. Im vorliegenden Beispiel sind die Zylinder 10, 11 an den Hebeln 3a, 4a angelenkt und die Kolbenstangen 10a, 11a an dem Kreuzkopf 5. Grundsätzlich können die Verbindungshebel auch umgekehrt ausgebildet sein, d.h. die Zylinder 10, 11 können an dem Kreuzkopf 5 und die Kolbenstangen 10a, 11a an den Hebeln 3a, 4a angelenkt sein. Desweiteren ist es prinzipiell auch möglich, andere Antriebe als die hier beschriebenen Kolben-Zylinder-Einheiten vorzusehen, um in ihrer Länge veränderbare Verbindungshebel zu realisieren. Grundsätzlich könnte daher auch eine elektrisch angetriebene Spindel-Mutter-Kombination vorgesehen werden (Spindeln 10a, 11a und Muttern 10, 11). Aufgrund der hohen Belastungen beim Schließkraftaufbau dürften jedoch die Kolben-Zylinder-Einheiten als Antriebe für die Veränderung der Länge der Verbindungshebel bevorzugt zum Einsatz kommen bzw die Verbindungshebel als Kolben-Zylinder-Einheiten ausgebildet sein. Die Funktionsweise dieser Kniehebel-Schließeinheit ist die gleiche wie beim ersten Ausführungsbeispiel, d.h. der Antrieb für den Kreuzkopf einerseits und die Antriebe für die Veränderung der Länge der Verbindungshebel andererseits können in gleicher Weise zeitlich aufeinander abgestimmt aktiviert werden.

Die Figur 4 zeigt eine dritte Ausführungsform einer erfindungsgemäßen Kniehebel-Schließeinheit (lediglich im vollständig gestreckten Zustand), wobei die Antriebe zum Verfahren der Verbindungshebel 6 und 7 als Excenter-Antriebe 12, 13 ausgebildet sind, wie dies durch den halbkreisförmigen Pfeil um die Drehachse der jeweiligen Kurbelscheibe 14, 15 angedeutet ist.

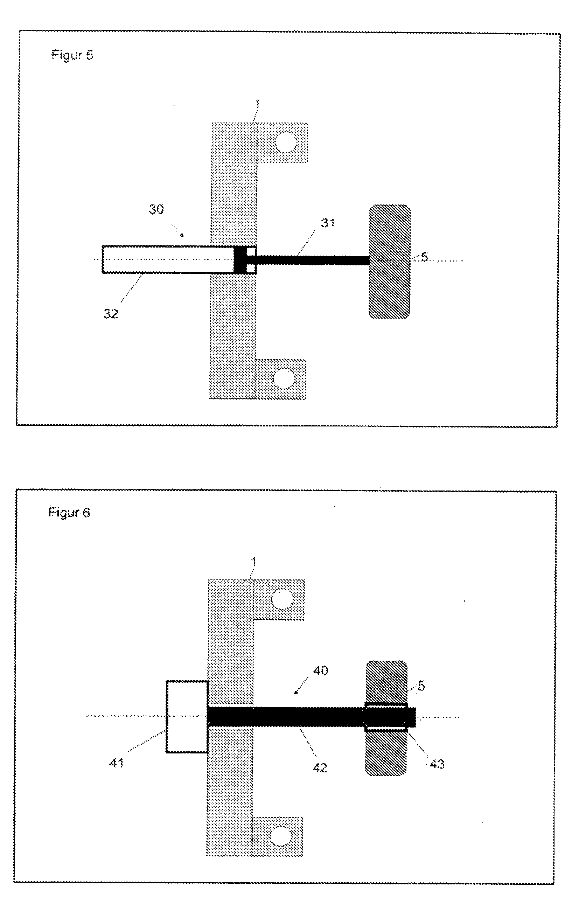

In den Figuren 5 und 6 sind verschiedene Ausgestaltungen für den ersten Antrieb, d.h. den Antrieb zum Verfahren des Kreuzkopfs 5 dargestellt (Kreuzkopf-Antrieb). Der Kreuzkopf-Antrieb 30 gemäß der Figur 5 ist als hydraulischer Antrieb ausgebildet, wobei die Kolbenstange 31 an dem Kreuzkopf 5 angelenkt ist und der Zylinder 32 an der Stützplatte 1 befestigt ist. Selbstverständlich können die Positionen von Kolbenstange und Zylinder auch vertauscht sein. Der Kreuzkopf-Antrieb 40 gemäß der Figur 6 ist als elektrischer Antrieb ausgebildet. Ein Motor 41 an der Stützplatte 1 erzeugt die Drehbewegungen für eine Spindel 42, welche im Eingriff mit einer am Kreuzkopf 5 drehfest befestigten Spindelmutter 43 steht. Andere Anordnungen von Motor, Spindel und Spindelmutter sind denkbar und dem Fachmann geläufig.

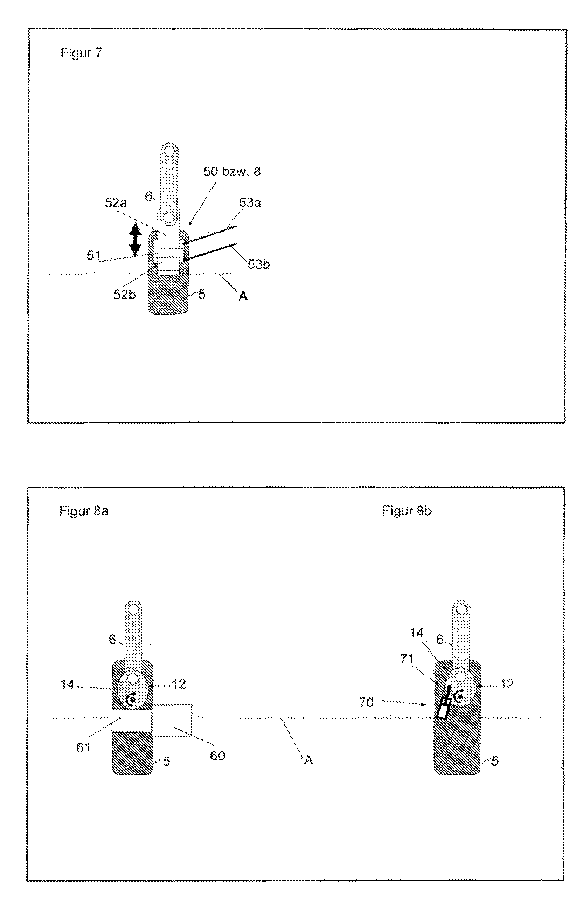

Die Figur 7 zeigt ein Ausführungsbeispiel für einen mit einem Verbindungshebel in Wirkverbindung stehenden Antrieb 8 bzw. 9, mit dem der Verbindungshebel gegenüber dem Kreuzkopf 5 verfahrbar ist. Das Ausführungsbeispiel beschränkt sich auf den oberen Verbindungshebel 6 aus den Figuren 1 und 2. Als Antrieb 8 ist ein hydraulischer Antrieb 50 vorgesehen. Hierzu ist in dem Kreuzkopf 5 ein Hohlraum vorgesehen, in dem ein Kolben 51 vorzugsweise senkrecht zur Maschinenlängsachse A verfahren werden kann. Zu beiden Seiten des Kolbens 51 verlaufen Kolbenstangen 52a und 52b, wobei die Kolbenstange 52a gelenkig mit dem Verbindungshebel 6 verbunden ist. Zu beiden Seiten des Kolbens 51 befinden sich Druckmittelräume, die über Leitungen 53a und 53b mit einer hier nicht dargestellten Hydraulikeinrichtung verbunden sind. Je nachdem welcher Druckmittelraum mit einem Druckmittel beaufschlagt wird, wird der Kolben 51 und damit - über die Kolbenstange 52a - der Verbindungshebel 6 von dem Kreuzkopf 5 weg verfahren oder auf diesen zu verfahren. Im ersten Fall werden die Haupthebel in den durchgestreckten Zustand gebracht und im zweiten Fall werden die Haupthebel eingeklappt. Der besseren Übersicht halber nicht dargestellt ist der weitere hydraulische Antrieb unterhalb der Maschinenlängsachse A für den unteren Verbindungshebel 7. Dieser kann in analoger Weise ausgebildet sein und betrieben werden wie der hier beschriebene hydraulische Antrieb 50 für den oberen Verbindungshebel 6. Die Medienzufuhr zum Kreuzkopf (Hydraulik, Signale, ...) kann beispielsweise über eine Schleppkette erfolgen.

Die Figuren 8a und 8b zeigen verschiedene Ausgestaltungen für die Excenter-Antriebe 12 und 13 aus der Figur 4. Beispielsweise könnte gemäß der Figur 8a an dem Kreuzkopf 5 ein Motor 60 und ein mit der Kurbelscheibe 14 bzw. 15 in Wirkverbindung stehendes Getriebe 61 vorgesehen sein, um die Kurbelscheibe 14 bzw. 15 drehanzutreiben. Die Figur 8a zeigt den Excenter-Antrieb 12 für den oberen Verbindungshebel 6. Dieser Excenter-Antrieb umfasst also den Motor 60, das Getriebe 61 und die Kurbelscheibe 14. Für jede der Kurbelscheiben 14, 15 können separate Motoren und Getriebe vorgesehen werden, d.h. es können separate Excenter-Antriebe gebildet werden, oder es kann ein einziger Motor und ein einziges Getriebe zum Drehantreiben beider Kurbelscheiben 14 und 15 vorgesehen werden. Im letztgenannten Fall werden also die oberen und die unteren Verbindungshebel über einen einzigen Excenter-Antrieb verfahren, der einen Motor, ein Getriebe und die beiden Kurbelscheiben 14 und 15 umfasst. Die Figur 8b zeigt schematisch einen hydraulisch betätigten Excenter-Antrieb, wobei an dem Kreuzkopf 5 eine Kolben-Zylinder-Einheit 70 vorgesehen ist, deren Kolbenstange 71 an der Kurbelscheibe 14 angelenkt ist. Dieser Excenter-Antrieb umfasst also die Kolben-Zylinder-Einheit 70 und die Kurbelscheibe 14. Wie oben beim elektrischen Excenter-Antrieb können auch beim hydraulischen Excenter-Antrieb für jede der Kurbelscheiben 14, 15 separate Kolben-Zylinder-Einheiten vorgesehen werden. Es kann aber auch nur eine einzige in geeigneter Weise ausgebildete Kolben-Zylinder-Einheit zum Drehantreiben beider Kurbelscheiben 14 und 15 vorgesehen werden.

Weitere Ausführungen der erfindungsgemäßen Kniehebel-Schließeinheit und der dabei verwendeten Antriebe liegen im Rahmen fachmännischen Könnens. Es ist lediglich dafür zu sorgen, dass mittels zusätzlicher Antriebe die Verbindungshebel zwischen den kraftleitenden Hebelpaaren und dem Kreuzkopf nach außen bewegt werden können, um die kraftleitenden Hebelpaare in einen vollständig durchgestreckten Zustand bringen zu können und/oder dass mittels zusätzlicher Antriebe die Länge von geeignet ausgestalteten Verbindungshebeln verändert werden kann.

Wenn oben und unten jeweils mehrere Haupthebel (kraftleitende Hebel) vorgesehen sind, kann für jeden Haupthebel ein separater Verbindungshebel vorgesehen sein, welcher jeweils einen eigenen Antrieb zum Verfahren aufweisen kann. Es kann aber auch nur ein Antrieb für eine Gruppe von Verbindungshebeln vorgesehen sein, sofern diese in geeigneter Weise miteinander gekoppelt sind. Ferner können die oberen und die unteren Haupthebel gegebenenfalls mittels einer Querstrebe untereinander kraftübertragend verbunden und nur jeweils ein Verbindungshebel zwischen dem Kreuzkopf und der oberen und der unteren Querstrebe vorgesehen sein, wobei für jeden dieser beiden Verbindungshebel ein eigener Antrieb zum Verfahren der Verbindungshebel vorgesehen ist. In analoger Weise können anstelle der verfahrbaren Verbindungshebel auch in ihrer Länge veränderbare Verbindungshebel und deren Antriebe zwischen den Haupthebeln und dem Kreuzkopf vorgesehen werden.

Mittels der Maschinensteueurung kann der Betrieb der zusätzlichen Antriebe zum Verfahren der Verbindungshebel bzw. zum Verändern der Länge der Verbindungshebel auf den Betrieb des Antriebs zum Verfahren des Kreuzkopfes in geeigneter Weise abgestimmt werden. Dabei kann darauf geachtet werden, dass die zusätzlichen Antriebe für die Verbindungshebel erst dann aktiviert werden, wenn die Verfahrbewegung der Schließeinheit vollständig oder nahezu vollständig abgeschlossen ist, d.h. das Spritzgießwerkzeug vollständig oder nahezu vollständig geschlossen ist. Auf diese Weise kann sichergestellt werden, dass die Verbindungshebel gegenüber dem Kreuzkopf im wesentlichen in einer Richtung orthogonal zur Maschinenlängsachse verfahren werden bzw. dass die Veränderung der Länge der Verbindungshebel in einem Zustand erfolgt, in dem die Verbindungshebel im wesentlichen orthogonal zur Maschinenlängsachse ausgerichtet sind.

### Bezugszeichen liste

- 1: Stützplatte
- 2: Bewegliche Formaufspannplatte
- 3a, 3b: Obere Hebel
- 4a, 4b: Untere Hebel
- 5: Kreuzkopf
- 6, 7: Verbindungshebel
- 6', 7': In ihrer Länge veränderbare Verbindungshebel
- 8, 9: Antriebe für Verbindungshebel 6, 7
- 10: Zylinder
- 10a: Kolbenstange
- 11: Zylinder
- 11a: Kolbenstange
- 12, 13: Excenter-Antriebe
- 14, 15: Kurbelscheiben
- 20, 21: Antriebe zur Veränderung der Länge der Verbindungshebel 6', 7'
- 30: Hydraulischer Kreuzkopf-Antrieb
- 31: Kolbenstange
- 32: Zylinder
- 40: Elektrischer Kreuzkopf-Antrieb
- 41: Motor
- 42: Spindel
- 43: Spindelmutter
- 50: Hydraulischer Antrieb für Verbindungshebel 6
- 51: Kolben
- 52a, 52b: Kolbenstangen
- 53a, 53b: Druckmittelleitungen
- 60: Motor
- 61: Getriebe
- 70: Kolben-Zylinder-Einheit
- 71: Kolbenstange
- A: Maschinenlängsachse

## Patentansprüche

1. Kniehebel-Schließeinheit für eine Spritzgießmaschine, mit einer feststehenden Formaufspannplatte und einer beweglichen Formaufspannplatte (2) sowie mit einer Stützplatte (1), mit mindestens einem kraftleitenden Hebelpaar (3a, 3b; 4a, 4b) als Haupthebel zwischen der Stützplatte (1) und der beweglichen Formaufspannplatte (2), mit einem mittels eines ersten Antriebs (30, 40) linear entlang der Maschinenlängsachse (A) verfahrbaren Kreuzkopf (5), sowie mit Verbindungshebeln (6, 7; 6',7') zwischen dem Kreuzkopf (5) und dem oder den Haupthebeln (3a, 3b; 4a, 4b), mit denen die Haupthebel (3a, 3b; 4a, 4b) in einen durchgestreckten Zustand bringbar sind,
**dadurch gekennzeichnet, dass**
ein oder mehrere weitere mit den Verbindungshebeln (6, 7) in Wirkverbindung stehende Antriebe (8, 9) vorgesehen sind, mit denen die Verbindungshebel (6, 7) gegenüber dem Kreuzkopf (5) und/oder gegenüber den Haupthebeln (3a, 3b; 4a, 4b) im wesentlichen in einer Richtung orthogonal zur Maschinenlängsachse (A) verfahrbar sind, um die Haupthebel (3a, 3b; 4a, 4b) in den durchgestreckten Zustand bringen zu können, und/oder dass zwischen den Haupthebeln (3a, 3b; 4a, 4b) und dem Kreuzkopf (5) in ihrer Länge veränderbare Verbindungshebel (6', 7') vorgesehen sind, wobei für die Verbindungshebel (6', 7') jeweils wenigstens ein weiterer Antrieb (20, 21) vorgesehen ist, mit dem die Länge des jeweiligen Verbindungshebels (6', 7') veränderbar ist, um die Haupthebel (3a, 3b; 4a, 4b) in den durchgestreckten Zustand bringen zu können.

2. Kniehebel-Schließeinheit nach Anspruch 1,
**dadurch gekennzeichnet, dass**
als weitere Antriebe (8, 9) zum Verfahren der Verbindungshebel (6, 7) Kolben-Zylinder-Einheiten (50), insbesondere kurzhubige Hydraulikzylinder, an oder in dem Kreuzkopf (5) vorgesehen sind.

3. Kniehebel-Schließeinheit nach Anspruch 1,
**dadurch gekennzeichnet, dass**
als weitere Antriebe (8, 9) zum Verfahren der Verbindungshebel (6, 7) Excenter-Antriebe (12, 13) an oder in dem Kreuzkopf (5) vorgesehen sind.

4. Kniehebel-Schließeinheit nach Anspruch 1,
**dadurch gekennzeichnet, dass**
für die Veränderung der Länge der Verbindungshebel (6', 7') Kolben-Zylinder-Einheiten (20, 10, 10a; 21, 11, 11 a) vorgesehen sind, wobei die Verbindungshebel (6', 7') jeweils an ihrem einen Ende als Zylinder (10, 11) und an ihrem gegenüberliegenden Ende als Kolbenstange (10a, 11a) der Kolben-Zylinder-Einheit (20, 21) ausgebildet sind.

5. Kniehebel-Schließeinheit nach einem der vorstehenden Ansprüche,
**dadurch gekennzeichnet, dass**
mehrere Haupthebel oberhalb und mehrere Haupthebel unterhalb der Maschinenlängsachse (A) vorgesehen sind, insbesondere jeweils zwei obere und zwei untere Haupthebel, dass die oberen und die unteren Haupthebel jeweils durch eine Quertraverse miteinander verbunden sind, und dass ein oder mehrere verfahrbare und/oder in ihrer Länge veränderbare Verbindungshebel (6. 7; 6', 7') zwischen den Quertraversen und dem Kreuzkopf (5) vorgesehen sind.

6. Verfahren zum Betreiben einer Kniehebel-Schließeinheit nach einem der vorstehenden Ansprüche,
**dadurch gekennzeichnet, dass**
während der Schließbewegung der Antrieb (30, 40) für den Kreuzkopf (5) eingeschaltet ist, und dass während des Schließkraftaufbaus der oder die weiteren Antriebe (8, 9, 20, 21) der Verbindungshebel (6, 7; 6', 7') eingeschaltet sind.

7. Verfahren nach Anspruch 6,
**dadurch gekennzeichnet, dass**
auch während des Zuhaltens der Schließeinheit der oder die weiteren Antriebe (8, 9, 20, 21) der Verbindungshebel (6, 7; 6', 7') eingeschaltet sind.

8. Verfahren nach Anspruch 6 oder 7,
**dadurch gekennzeichnet, dass**
während einer ersten Phase der Schließbewegung der Antrieb (30, 40) für den Kreuzkopf (5) eingeschaltet ist und der oder die weiteren Antriebe (8, 9, 20, 21) der Verbinungshebel (6, 7; 6' 7') blockiert sind, dass gegen Ende der Schließbewegung eine Übergangsphase beginnt, in der alle Antriebe (30, 40, 8, 9, 20, 21) eingeschaltet sind, und dass am Ende der Übergangsphase der Antrieb (30, 40) für den Kreuzkopf (5) abgeschaltet wird.

9. Verfahren nach Anspruch 8,
**dadurch gekennzeichnet, dass**
die Übergangsphase beendet ist, wenn die Schließeinheit den geschlossenen Zustand erreicht hat, insbesondere sobald die auf den Formaufspannplatten aufgespannten Formhälften mit ihren Trennebenen aneinander stossen.

## Claims

1. A toggle lever clamping unit for an injection moulding machine, with a fixed platen and a movable platen (2) and with a support plate (1), with at least one force-conducting pair of levers (3a, 3b; 4a, 4b) as primary lever between the support plate (1) and the movable platen (2), with a cross clamp (5) which can be linearly moved along the longitudinal axis (A) of the machine by way of a first drive (30, 40), and with connecting levers (6, 7; 6', 7') between the cross clamp (5) and the primary lever (s) (3a, 3b; 4a, 4b), with which the primary levers (3a, 3b; 4a, 4b) are able to be put into a fully extended position,
**characterized in that**
one or several additional drives (8, 9) are provided, which are operationally connected to the connecting levers (6, 7), by way of which drives the connecting levers (6, 7) can be moved essentially in a direction that is orthogonal to the longitudinal axis of the machine (A) relative to the cross clamp (5) and/or relative to the primary levers (3a, 3b; 4a, 4b), in order to make it possible to put the primary levers (3a, 3b; 4a, 4b) in the fully extended position, and/or that length-adjustable connecting levers (6', 7') are provided between the primary levers (3a, 3b; 4a, 4b) and the cross clamp (5), wherein for each of the connecting levers (6', 7'), at least one additional drive (20, 21) is provided, with which the length of the respective connecting lever (6', 7') can be adjusted in order to make it possible to put the primary levers (3a, 3b; 4a, 4b) in the fully extended position.

2. The toggle lever clamping unit according to claim 1,
**characterized in that**
as additional drives (8, 9) for moving the connecting levers (6, 7), piston-cylinder units (50), in particular short-stroke hydraulic cylinders, are provided on or in the cross clamp (5).

3. The toggle lever clamping unit according to claim 1,
**characterized in that**
as additional drives (8, 9) for moving the connecting levers (6, 7), eccentric drives (12, 13) are provided on or in the cross clamp (5).

4. The toggle lever clamping unit according to claim 1,
**characterized in that**
for altering the length of the connecting levers (6', 7'), piston-cylinder units (20, 10, 10a; 21, 11, 11a) are provided, wherein the connecting levers (6', 7') are constructed respectively at their one end as a cylinder (10, 11) and at their opposite end as a piston rod (10a, 11a) of the piston-cylinder unit (20, 21).

5. The toggle lever clamping unit according to one of the preceding claims,
**characterized in that**
several primary levers are provided above and several primary levers are provided below the longitudinal axis (A) of the machine, in particular respectively two upper and two lower primary levers, that the upper and the lower primary levers are connected with one another respectively by a traverse member, and that one or several movable and/or length-adjustable connecting levers (6, 7; 6', 7') are provided between the traverse members and the cross clamp (5).

6. A method for operating a toggle lever clamping unit according to one of the preceding claims,
**characterized in that**
during the clamping movement the drive (30, 40) for the cross clamp (5) is engaged, and that during the build up of clamping force the or the additional drives (8, 9, 20, 21) of the connecting levers (6, 7; 6', 7') are engaged.

7. The method according to claim 6,
**characterized in that**
the or the additional drives (8, 9, 20, 21) of the connecting levers (6, 7; 6', 7') are also engaged during the time that the clamping unit is kept shut.

8. The method according to claim 6 or 7,
**characterized in that**
during a first phase of the clamping movement, the drive (30, 40) for the cross clamp (5) is engaged, and the or the further drives (8, 9, 20, 21) of the connecting levers (6, 7; 6', 7') are blocked, that towards the end of the clamping movement a transition phase begins, in which all drives (30, 40, 8, 9, 20, 21) are engaged, and that at the end of the transition phase the drive (30, 40) for the cross clamp (5) is deactivated.

9. The method according to claim 8,
**characterized in that**
the transition phase is terminated when the clamping unit has reached the closed state, in particular as soon as the mould halves which are clamped on the platens abut one another with their parting surfaces.

## Revendications

1. Ensemble de fermeture à levier à genouillère pour une machine de moulage par injection, comprenant une plaque de serrage de moule fixe et une plaque de serrage de moule mobile (2) ainsi qu'une plaque d'appui (1), comprenant au moins une paire de leviers (3a, 3b ; 4a, 4b) transporteurs de force en tant que leviers principaux entre la plaque d'appui (1) et la plaque de serrage de moule mobile (2), comprenant une tête circulaire (5) pouvant être déplacée de façon linéaire le long de l'axe longitudinal de la machine (A) au moyen d'un premier entraînement (30, 40), ainsi que des leviers de liaison (6, 7 ; 6', 7') entre la tête circulaire (5) et le ou les levier (s) principal/principaux (3a, 3b ; 4a, 4b), avec lesquels les leviers principaux (3a, 3b ; 4a, 4b) peuvent être amenés dans un état complètement étendu,
**caractérisé en ce**
**qu'**un ou plusieurs entraînement(s) supplémentaire(s) (8, 9) en liaison active avec les leviers de liaison (6, 7) sont prévus, avec lesquels les leviers de liaison (6, 7) peuvent être déplacés essentiellement dans un sens orthogonal à l'axe longitudinal de la machine (A) par rapport à la tête circulaire (5) et/ou aux leviers principaux (3a, 3b ; 4a, 4b), pour pouvoir amener les leviers principaux (3a, 3b ; 4a, 4b) dans l'état complètement étendu et/ou que des leviers de liaison (6', 7') modifiables en longueur sont prévus entre les leviers principaux (3a, 3b ; 4a, 4b) et la tête circulaire (5), sachant que pour les leviers de liaison (6', 7'), au moins un entraînement supplémentaire (20, 21) respectif est prévu, avec lequel la longueur du levier de liaison (6', 7') respectif peut être modifiée pour pouvoir amener les leviers principaux (3a, 3b ; 4a, 4b) dans l'état complètement étendu.

2. Ensemble de fermeture à levier à genouillère selon la revendication 1,
**caractérisé en ce que**
des ensembles pistons-cylindres (50), en particulier des cylindres hydrauliques à faible course pour le déplacement des leviers de liaison (6, 7), sont prévus sur ou dans la tête circulaire (5) en tant qu'entraînements supplémentaires (8, 9).

3. Ensemble de fermeture à levier à genouillère selon la revendication 1,
**caractérisé en ce que**
des entraînements excentriques (12, 13) sont prévus sur ou dans la tête circulaire (5) en tant qu'entraînements supplémentaires (8, 9) pour le déplacement des leviers de liaison (6, 7).

4. Ensemble de fermeture à levier à genouillère selon la revendication 1,
**caractérisé en ce que**
des ensembles pistons-cylindres (20, 10, 10a ; 21, 11, 11a) sont prévus pour modifier la longueur des leviers de liaison (6', 7'), sachant que les leviers de liaison (6', 7') sont formés respectivement en tant que cylindre (10, 11) sur une de leurs extrémités et en tant que tige de piston (10a, 11a) de l'ensemble pistons-cylindres (20, 21) sur leur extrémité opposée.

5. Ensemble de fermeture à levier à genouillère selon l'une des revendications précédentes,
**caractérisé en ce que**
plusieurs leviers principaux au-dessus de, et plusieurs leviers principaux au-dessous de, l'axe longitudinal de la machine (A) sont prévus, en particulier deux leviers principaux supérieurs et deux leviers principaux inférieurs respectivement, que les leviers principaux supérieurs et inférieurs sont reliés entre eux par une traverse et qu'un ou plusieurs levier(s) de liaison (6, 7 ; 6', 7') pouvant être déplacé(s) et/ou modifiable(s) en longueur est/sont prévu(s) entre les traverses et la tête circulaire (5).

6. Procédé destiné au fonctionnement d'un ensemble de fermeture à levier à genouillère selon l'une des revendications précédentes,
**caractérisé en ce que**
pendant le mouvement de fermeture, l'entraînement (30, 40) pour la tête circulaire (5) est activé et que pendant la montée de la force de fermeture, l'entraînement ou les entraînements supplémentaire(s) (8, 9, 20, 21) des leviers de liaison (6, 7 ; 6', 7') sont activés.

7. Procédé selon la revendication 6,
**caractérisé en ce que**
l'entraînement ou les entraînements supplémentaire(s) (8, 9, 20, 21) des leviers de liaison (6, 7 ; 6', 7') sont activés également pendant le maintien en fermeture de l'ensemble de fermeture.

8. Procédé selon la revendication 6 ou 7,
**caractérisé en ce que**
pendant une première phase du mouvement de fermeture, l'entraînement (30, 40) pour la tête circulaire (5) est activé et l'entraînement ou les entraînements supplémentaire(s) (8, 9, 20, 21) des leviers de liaison (6, 7 ; 6', 7') sont bloqués, de sorte que vers la fin du mouvement de fermeture, une phase de transition commence au cours de laquelle tous les entraînements (30, 40, 8, 9, 20, 21) sont activés, et qu'à la fin de la phase de transition, l'entraînement (30, 40) pour la tête circulaire (5) est désactivé.

9. Procédé selon la revendication 8,
**caractérisé en ce que**
la phase de transition est terminée lorsque l'ensemble de fermeture a atteint l'état fermé, en particulier dès que les moitiés de moule serrées sur les plaques de serrage de moule butent l'une sur l'autre avec leurs plans de séparation.
